# EUROPEAN PATENT SPECIFICATION

(11) **EP 1 069 323 B1**
(45) Date of publication and mention of the grant of the patent: **12.11.2003**
(21) Application number: 00122451.8
(22) Date of filing: 18.11.1997
(51) Int. Cl.: F15B 20/00

(54) **Cross flow with crossmirror and lock out capability valve**
Ventil mit sich kreuzenden Leitungen und mit Sperrfunktion
Soupape à courants croisés avec possibilité de serrage

(30) Priority: 16.12.1996 US 33016 P; 20.12.1996 US 770878; 06.03.1997 US 812689
(43) Date of publication of application: 17.01.2001
(62) Divisional of application: 97120203.1
(73) Proprietor: Ross Operating Valve Company, Troy, Michigan 48084-4838 (US)
(72) Inventor: Russell, Neil E., Bloomfield Hills, Michigan 48013 (US); Mathis, Logan H., Lavonia, Georgia 30553 (US); Wolfe, C. Brian, Lavonia, Georgia 30553 (US)
(74) Representative: Wehnert, Werner, Dipl.-Ing.

(56) References cited:
- DE-B- 1 249 040
- DE-U- 8 612 453
- DE-U- 9 014 789
- US-A- 3 170 484
- US-A- 4 181 148
- US-A- 4 706 548
- US-A- 5 113 907

## Description

### Field of the Invention

The present invention relates to a control valve. More particularly, the present invention relates to a dual poppet fluid control valve which, when an abnormal situation is encountered, the control valve moves to a locked out position which in one embodiment requires a resetting operation before the control valve will again function and in another embodiment, the control valve automatically resets.

### Background and Summary of the Invention

Machine tools of various types operate through a valving system which interacts with a pneumatic controlled clutch and/or brake assembly. For safety reasons, the control valves which are used to operate these machine tools require the operator to actuate two separate control signal applying contacts essentially simultaneously. This requirement of simultaneous application ensures that the operator will not have his hand near the moving components of the machine tool when an operating cycle is initiated. The two control signal applying contacts can then be connected to the valving system which allows compressed air to be delivered to the machine tool to perform its operating cycle.

Safety rules and regulations require the valving system to be designed such that if a component in the valving system malfunctions, the valving system will not allow additional movement of the machine tool. In addition, the valving system must ensure that a new operation cycle of the machine tool cannot be initiated after a component of the valving system has become defective.

Prior art electromagnetic valving systems which are utilized for the operation of machine tools meet these safety requirements through the use of a double valve assembly. The double valve assembly, includes two electromagnetic supply valves which are normally closed. Each of the supply valves is moved to an open position in response to an electrical control signal. The two supply valves are arranged in series with respect to the source of compressed air. The double valve assembly also includes two exhaust valves which are normally open. Each exhaust valve is closed by a respective supply valve when it is opened. It is therefore necessary for the supply valves to be opened simultaneously otherwise, supply air will be exhausted from the system through one of the exhaust valves. The opening and closing of the valve units is monitored by sensing air pressures in the respective valve units and then compare these two pressures. the monitoring and comparing of these two pressures is accomplished by using a single air cylinder which is separated into two chambers by a piston. the pressure in each valve unit is delivered to one of the chambers.Thus, unequal pressures in the valve units will cause movement of the normally static piston which will then interrupt the electrical signal to one of the valve units. This and other external electronic monitoring arrangements are expensive and require that electrical signal processing equipment be designed and utilized.

US-A-5,113,907 discloses a control valve system as defined in the introductory portion of claim 1. The control valve system of this document is a dynamic self-monitoring air operating system for a pneumatic control system having a double safety valve. The dynamic includes constantly dynamic monitor valves, and a damper feature for preventing premature, undesired shutdowns of the control system, according to predetermined system parameters. The dynamic self-monitoring air operating system disclosed in US-A-5,113,907 is overly complex in achieving its intended usage, and includes an overly complex reset system.

The continued development of the valving systems for machine tools has been directed toward more reliable, simpler and less costly valving systems which both meet and exceed the safety performance requirements in force today as well as those proposed for the future.

The present invention and modifications and further developments of the invention are defined in the patent claims.

The present invention provides the art with a control valve system which operates entirely pneumatically thus eliminating the need for electrical monitoring and the associated controls. The control valve system includes a plurality of valves each of which open or close during the actuation or deactuation of the valves. The control valve system monitors the dynamic movement of the various valves of the system t ensure the proper functioning of the control valve system. The control valve system moves to a locked out position upon sensing a malfunction and remains in this locked out position until a resetting operating is performed. Thus, the operation of the control assembly is totally dynamic and the system does not rely on the monitoring of a static member to ensure is proper function.

Other advantages and objects of the present invention will become apparent to those skilled in the art from the subsequent detailed escritpion, appended claims and drawings,

### BRIEF DESCRIPTION OF THE DRAWINGS

In the drawings which illustrate the best mode presently contamplated for carrying out the present invention:
Figure 1 is a schematic circuit diagram of the control valve system of the present invention shown in a deactuated position;
Figure 2 is a schematic illustration of the control valve shown in its deactuated position;
Figure 3 is a schematic circuit diagram of the control valve system of the present invention shown in an actuated position;
Figure 4 is a schematic illustration of the control valve shown in Figure 1 in its actuated position;
Figure 5 is a schematic circuit diagram of the control valve system of the present invention shown in an abnormal position;
Figure 6 is a schematic illustration of the control valve shown in Figure 1 in its abnormal position;
Figure 7 is a schematic circuit diagram of the control valve system of the present invention shown in a locked out position;
Figure 8 is a schematic illustration of the control valve shown in Figure 1 in its locked out position;
Figure 9 is a schematic illustration of the valving system shown in Figures 1-8 in accordance with another embodiment of the present invention.

### Detailed Description of the Preferred Embodiment

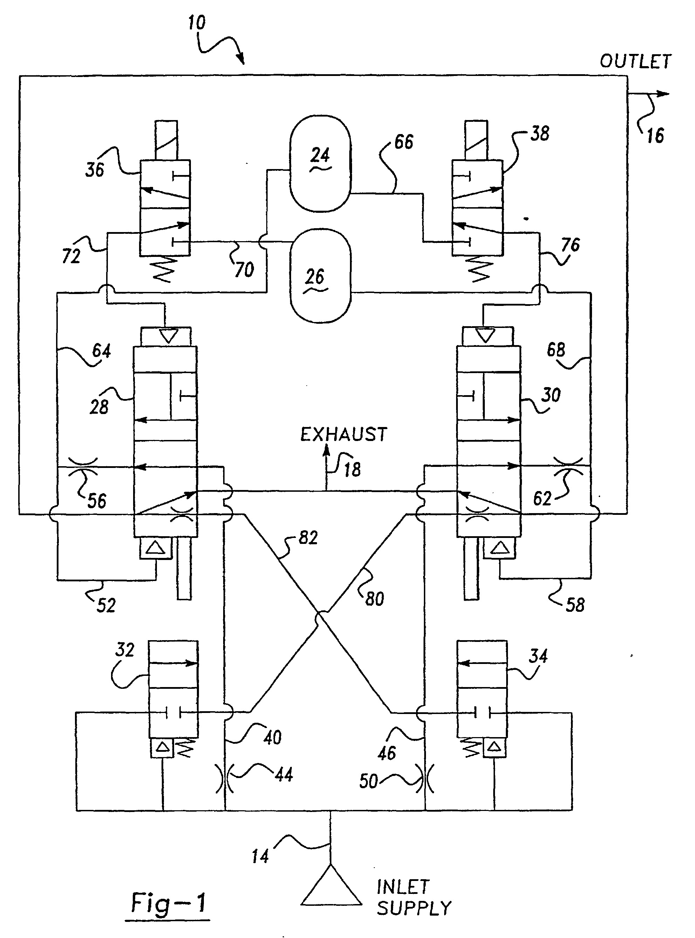

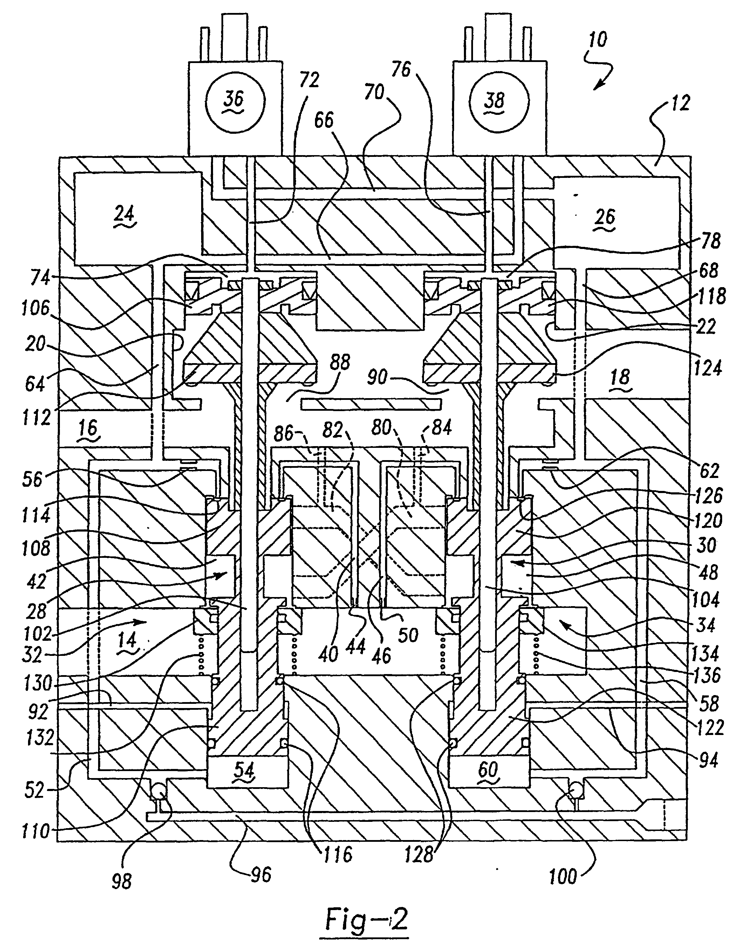

Referring now to the drawings in which like reference numerals designate like or corresponding parts throughout the several views, there is shown in Figures 1 and 2 a control valve system in accordance with the present invention which is designated generally by the reference numeral 10. Control valve system 10 is shown as a schematic fluid circuit in Figure 1 and as a fluid control valve in Figure 2.

Referring now to Figure 2, control valve system 10 comprises a housing 12 having a fluid inlet passage 14, a fluid outlet passage 16, a fluid exhaust passage 18, a first valve bore 20, a second valve bore 22, a first fluid reservoir 24 and a second fluid reservoir 26. Disposed within first valve bore 20 is a first valve member 28 and disposed within second valve bore 22 is a second valve member 30. Located within inlet passage 14 in a coaxial relationship with first valve member 28 is a third valve member 32. Also located within inlet passage 14 in a coaxial relationship with second valve member 30 is a fourth valve member 34. A pair of solenoid valves 36 and 38 are attached to housing 12.

A plurality of fluid passages interconnect valve bores 20 and 22 with inlet passage 14, outlet passage 16, exhaust passage 18, reservoir 24, reservoir 26, valve 36 and valve 38. A fluid passage 40 extends between inlet passage 14 and an intermediate chamber 42 formed by bore 20. A restrictor 44 is disposed within passage 40 to limit the amount of fluid flow through passage 40. A fluid passage 46 extends between inlet passage 14 and an intermediate chamber 48 formed by bore 22. A restrictor 50 is disposed within passage 46 to limit the amount of fluid flow through passage 46.

A fluid passage 52 extends between chamber 42 and a lower chamber 54 formed by bore 20. A restrictor 56 is disposed within passage 52 to limit the amount of fluid flow through passage 52. A fluid passage 58 extends between chamber 48 and a lower chamber 60 formed by bore 22. A restrictor 62 is disposed within passage 58 to limit the amount of fluid flow through passage 58. A fluid passage 64 extends between passage 52 and reservoir 24 such that restrictor 56 is located between chamber 42 and reservoir 24. A fluid passage 66 extends between reservoir 24 and the input to solenoid valve 38. A fluid passage 68 extends between passage 58 and reservoir 26 such that restrictor 62 is located between chamber 48 and reservoir 24. A fluid passage 70 extends between reservoir 26 and the input to solenoid valve 36. A passage 72 extends between the output of solenoid valve 36 and an upper chamber 74 formed by bore 20. A passage 76 extends between the output of solenoid valve 38 and an upper chamber 78 formed by bore 22.

A cross passage 80 extends between the lower portion of chamber 42 and the upper portion of chamber 48. A cross passage 82 extends between the lower portion of chamber 48 and the upper portion of chamber 42. A fluid passage 84 extends between passage 80 and outlet passage 16. A fluid passage 86 extends between passage 82 and outlet passage 16. Outlet passage 16 is in communication with exhaust passage 18 through two ports 88 and 90. The upper portions of chambers 54 and 60 are in communication with atmospheric pressure through passages 92 and 94, respectively. A reset passage 96 extends into housing 12 and is in communication with the lower portion of chambers 54 and 60 by communicating with passages 52 and 58, respectively. A pair of check valves 98 and 100 are disposed between reset passage 96 and passages 52 and 58 respectively, to prohibit fluid flow between passages 52 or 58 to reset passage 96 but allow fluid flow from reset passage 96 to one or both passages 52 and 58.

Disposed within bore 20 is valve member 102 and disposed within bore 22 is valve member 104. Valve member 102 comprises an upper piston 106, an intermediate piston 108 and a lower piston 110 all of which move together as a single unit. Upper piston 106 is disposed within chamber 74 and includes a valve seat 112 which opens and closes port 88 located between outlet passage 16 and exhaust passage 18. Intermediate piston 108 is disposed within chamber 42 and includes an annular passage 114 which fluidly connects passage 40 to passage 52 when piston 108 is seated against housing 12. Lower piston 110 is located within chamber 54 and includes a pair of seals 116 which seal inlet passage 14 from passage 92 and seal chamber 54 from passage 92. Valve member 104 comprises a upper piston 118, an intermediate piston 120 and a lower piston 122 all of which move together as a single unit. Upper piston 118 is disposed within chamber 78 and includes a valve seat 124 which opens and closes port 90 located between outlet passage 16 and exhaust passage 18. Intermediate piston 120 is disposed within chamber 48 and includes an annular passage 126 which fluidly connects passage 46 to passage 58 when piston 120 is seated against housing 12. Lower piston 122 is located within chamber 60 and includes a pair of seals 128 which seal inlet passage 14 from passage 94 and seal chamber 60 from passage 94.

Valve member 32 is located around lower piston 110 and comprises a valve seat 130 and a valve spring 132. Valve spring 132 biases valve seat 130 against housing 12 to prohibit fluid flow between inlet passage 14 and chamber 42. Valve member 34 is located around piston 122 and comprises a valve seat 134 and a valve spring 136. Valve spring 136 biases valve seat 134 against housing 12 to prohibit fluid flow between inlet passage 14 and chamber 48.

Figures 1 and 2 illustrate control valve system 10 in its deactuated position. Pressurized fluid from inlet passage 14 is biasing valve seats 130 and 134 against housing 12 closing communication between inlet passage 14 and both chambers 42 and 48. Pressurized fluid is provided to passage 40 through restrictor 44, to passage 52 through annular passage 114 through restrictor 56 and into chamber 54 to bias valve member 102 upward as shown in Figure 2 seating piston 108 against housing 12. Pressurized fluid also flows through passage 52, through passage 64 to reservoir 24 and from reservoir 24 to the inlet of solenoid valve 38 through passage 66. In a similar manner, pressurized fluid from inlet passage 14 is provided to passage 46 through restrictor 50 to passage 58 through annular passage 126 through restrictor 62 and into chamber 60 to bias valve member 104 upward as shown in Figure 2 seating piston 120 against housing 12. Pressurized fluid also flows through passage 58, through passage 68 to reservoir 26 and from reservoir 26 to the inlet of solenoid valve 36 through passage 70. Outlet passage 16 is in communication with exhaust passage 18 due to valve seats 112 and 124 being biased upward opening ports 88 and 90. Intermediate chambers 42 and 48 are also open to exhaust passage 18 through cross passages 80 and 82, respectively, through passages 84 and 86, respectively. The fluid pressure below piston 110 and 122 of valve members 102 and 104, respectively, bias valve members 102 and 104 upward maintaining control valve system 10 in the deactuated position. The connection between passages 40 and 52 through annular passage 114 and the connection between passages 46 and 58 through annular passage 126 maintain fluid pressure within chambers 54 and 60 and reservoirs 24 and 26.

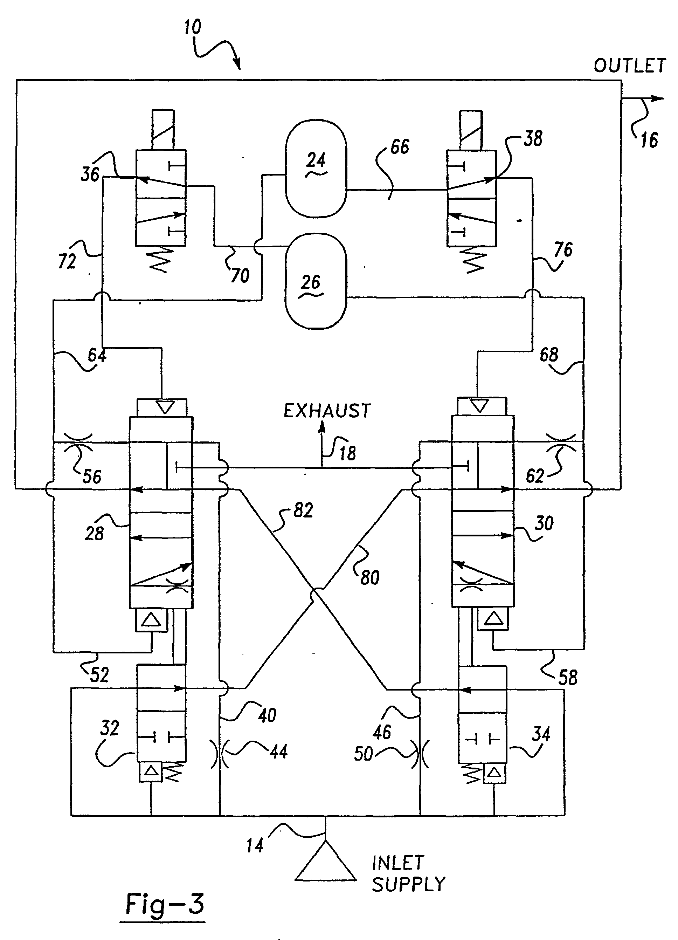

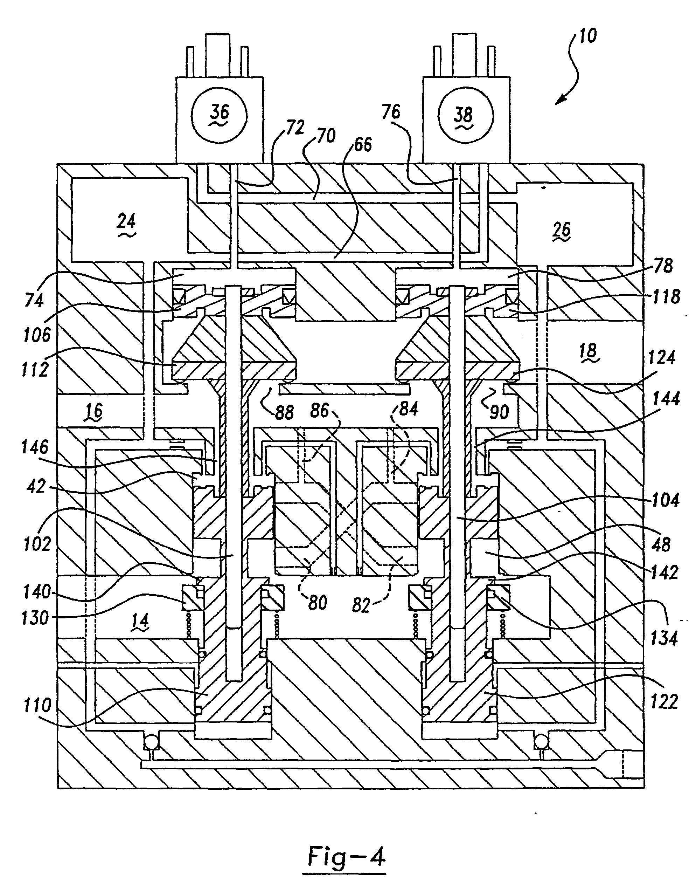

Figures 3 and 4 illustrate control valve system 10 in its actuated position. Both solenoid valves 36 and 38 have been substantially simultaneously actuated. The actuation of solenoid valve 36 connects passage 70 and thus reservoir 26 to passage 72. Pressurized fluid is directed into chamber 74 to move valve member 102 downward as shown in Figure 4. The diameter of piston 106 is larger than the diameter of piston 110 thus causing the load which moves valve member 102 downward. In a similar manner, the actuation of solenoid valve 38 connects passage 66 and thus reservoir 24 to passage 76. Pressurized fluid is directed into chamber 78 to move valve member 104 downward as shown in Figure 4. The diameter of piston 118 is larger than the diameter of piston 122 thus causing the load which moves valve member 104 downward. When valve members 102 and 104 move downward, an annular flange 140 on piston 110 unseats valve seat 130 and an annular flange 142 on piston 122 unseats valve seat 134. Pressurized fluid flows from inlet passage 14 into the lower portion of chamber 42 through passage 80 to the upper portion of chamber 48 and through a gap 144 between valve member 104 and housing 12 to provide pressurized fluid to outlet passage 16. Pressurized fluid also flows through passage 84 to outlet passage 16. In a similar manner, pressurized fluid flows from inlet passage 14 into the lower portion of chamber 48 through passage 82 to the upper portion of chamber 42 and through a gap 146 between valve member 102 and housing 12 to provide pressurized fluid to outlet passage 16. Pressurized fluid also flows through passage 86 to outlet passage 16. The movement of valve members 102 and 104 downward seats valve seats 112 and 124 against housing 12 to close ports 88 and 90 to isolate outlet passage 16 from exhaust passage 18. The fluid pressure within reservoirs 24 and 26 will initially be reduced when valves 36 and 38 are actuated but the fluid pressure will return to supply pressure at inlet passage 14 because reservoirs 24 and 26 are still open to inlet passage 14 and outlet passage 16 is isolated from exhaust passage 18.

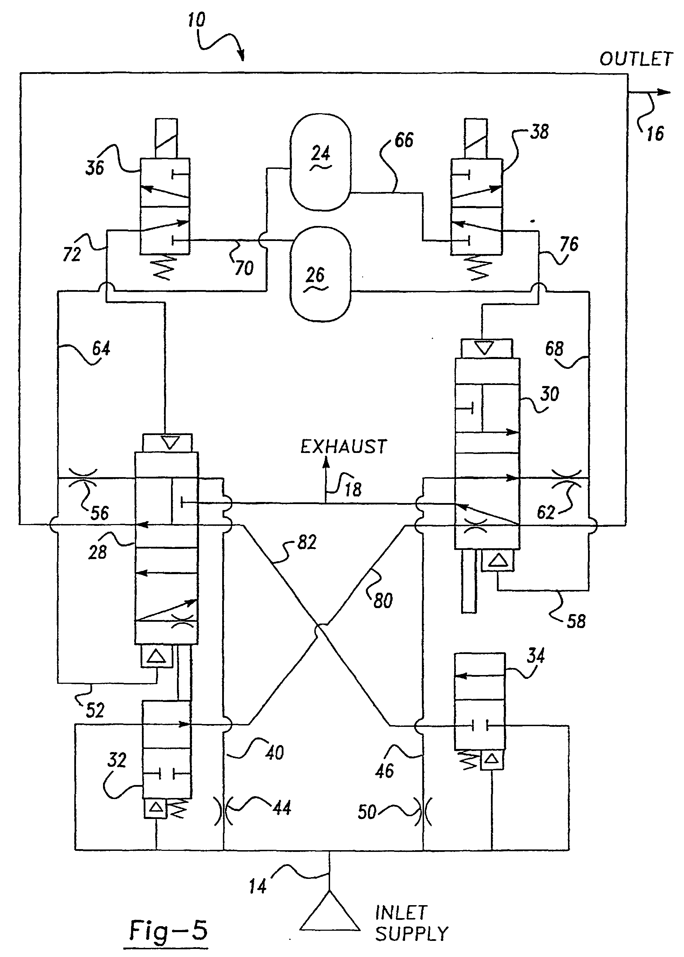

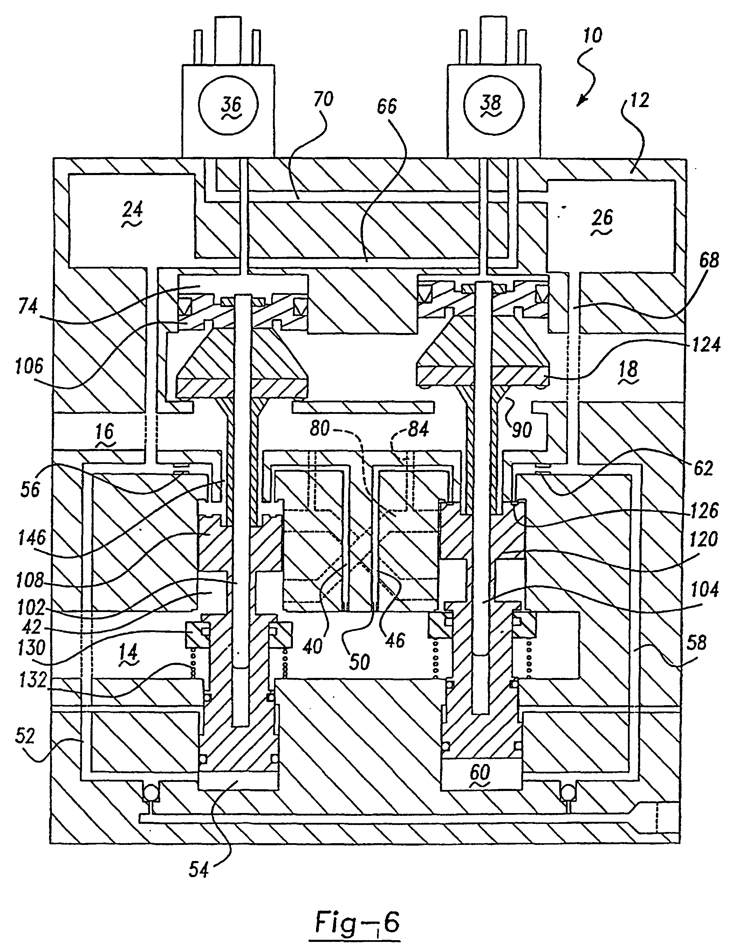

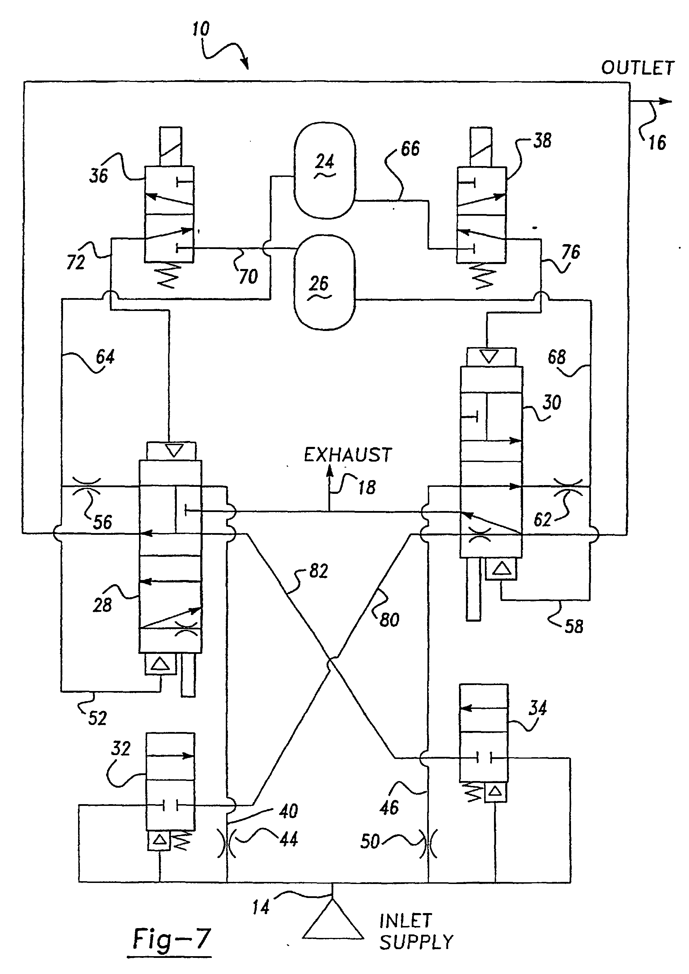

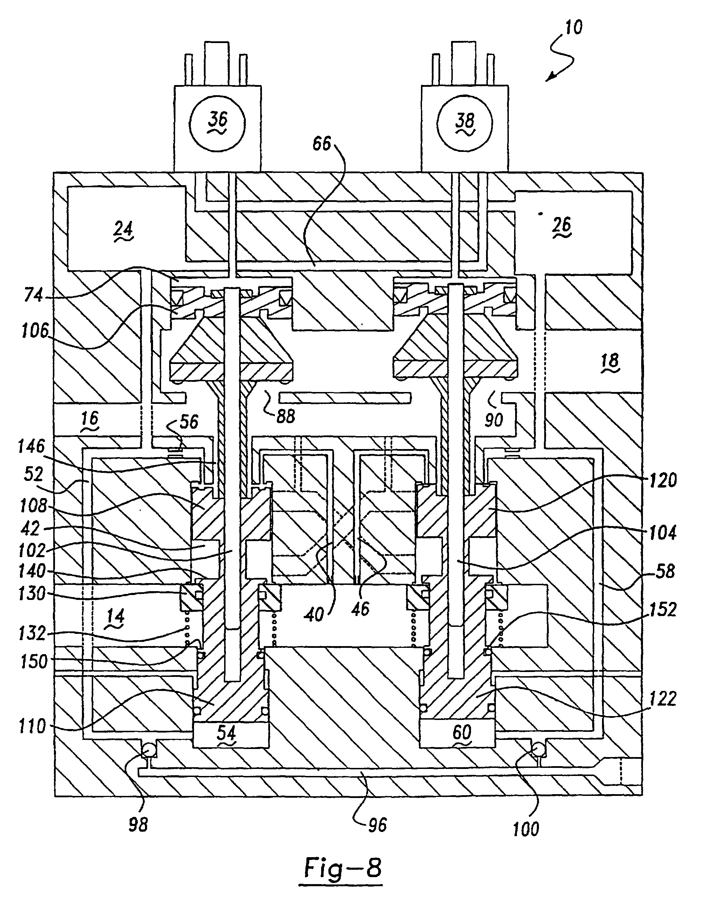

Figures 5 and 6 illustrate control valve system 10 in an abnormal position. In Figures 5 and 6, valve member 104 is located in its upward position while valve member 102 is located in its lower position. Both solenoid valves 36 and 38 are located in their closed position. Valve member 104 is located in its upward position similar to that shown in Figure 1. Pressurized fluid from inlet passage 14 is supplied to passage 46 through restrictor 50 to passage 58 through annular passage 126 through restrictor 62 and into chamber 60 to bias valve member 104 upward as shown in Figure 6 seating piston 120 against housing 12. Pressurized fluid also flows through passage 68 to reservoir 26 and from reservoir 26 to the inlet of solenoid valve 36 through passage 70. Outlet passage 16 is in communication with exhaust passage 18 due to valve seat 124 being biased upward opening port 90. Valve member 102 is located in its lower position which opens various passages to outlet passage 16 which, because the position of valve member 104, is open to exhaust passage 18. The upper portion of chamber 42 is open to exhaust through gap 146. Pressurized fluid from inlet passage 14 is bled to exhaust through passage 40 and through the upper portion of chamber 42 through gap 146, through outlet passage 16, through port 90 to exhaust passage 18. In addition, pressurized fluid from inlet passage 14 will bleed to exhaust passage 18 by entering the lower portion of chamber 42, flow through passage 80, through passage 84, through outlet passage 16, through port 90 and into exhaust passage 18. Pressurized fluid in passage 52 and thus chamber 54 is also bled to exhaust through restrictor 56 which removes the biasing being applied to valve member 102. In addition, fluid pressure in reservoir 24 is bled to exhaust through restrictor 56 removing the pressurized fluid being supplied to solenoid valve 38 through passage 66. The amount of time for chamber 54 and reservoir 24 to bleed to exhaust will depend upon the size of chamber 54, reservoir 24 and restrictor 56. With the release of pressurized air from chamber 74 above piston 106 and the presence of pressurized air within inlet passage 14 acting against the bottom of valve seat 130, valve spring 132 will move valve member 102 to an intermediate position where valve seat 130 is seated against housing 12 but piston 108 is not seated against housing 12. This condition is shown in Figures 7 and 8.

Figures 7 and 8 illustrate control valve system 10 in a locked out position. When valve seat 130 urges valve member 102 upwards due to the biasing of valve spring 132, valve seat 130 pushes against annular flange 140 to move valve member 102. Because of a lost motion attachment between valve seat 130 and piston 110, when valve seat 132 engages housing 12, piston 108 has not yet engaged housing 12. Additional movement of valve member 102 is required to seat piston 108 against housing 12 and connect passage 40 to passage 52 and provide pressurized fluid to chamber 54 and reservoir 24. Without the seating of piston 108 to housing 12, the upper portion of chamber 42 and thus passages 40 and 52 are open to exhaust passage 18 through gap 146, outlet passage 16 and ports 88 and 90 and exhaust passage 18. Thus reservoir 24 is open to exhaust along with passage 66 and the input to solenoid valve 38. Chamber 54 is also open to exhaust eliminating any biasing load which would urge valve member 102 upward to seat piston 108 against housing 12. An annular shoulder 150 located on piston 110 and open to inlet passage 14 biases valve member 102 downward with annular flange 140 being urged against valve seat 130 to keep valve member 102 in its intermediate position and control valve system 10 in its locked out position. A similar shoulder 152 is located on piston 122.

When it is desired to move control valve system 10 from its locked out position to its deactuated position shown in Figure 1, pressurized fluid is supplied to reset passage 96. Pressurized fluid being supplied to reset passage 96 opens check valve 98 and pressurized fluid fills reservoir 24 and chamber 54. Restrictor 56 will limit the amount of fluid bled off to exhaust during the resetting procedure. Once reservoir 24 and chamber 54 are filled with pressurized fluid, the fluid within chamber 54 acts against piston 110 to move valve member 102 upward to seat piston 108 against housing 12. Fluid passage 40 is again in communication with passage 52 and control valve system 10 is again positioned in its deactuated position as shown in Figures 1 and 2.

While the above description of Figures 5 through 8 have been described with valve member 102 being located in its intermediate and locked out position and valve member 104 being located in its deactuated position, it is to be understood that a similar locked out position of control valve system 10 would occur if valve member 102 were located in its deactuated condition and valve member 104 were located in its intermediate and locked out condition. The resetting procedure of applying pressurized fluid to reset passage 96 would cause the pressurized fluid to open check valve 100 to fill reservoir 26 and chamber 60. The pressurized fluid in chamber 60 would lift valve member 104 to seat piston 120 against housing 12 reconnecting passage 46 with passage 58.

Thus, control valve system 10 is a fully fluidically operating valve system which has the capability of sensing an abnormal condition and responding to this abnormal condition by switching to a locked out condition which then requires an individual to go through a resetting operation before control valve system 10 will again function.

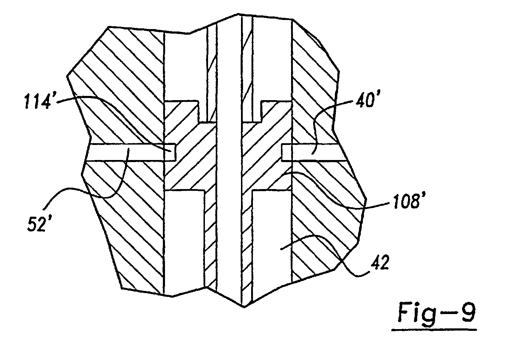

Figure 9 illustrates another embodiment of the present invention. In the embodiment shown in Figures 1-8, piston 108 includes annular passage 114 located in an upper surface of piston 108 to fluidically connect passage 40 with passage 52. Figure 9 illustrates a piston 108 which fluidically connects a passage 40 with a passage 52 through a passage 114 located on the external surface of piston 108. In a similar manner, piston 120 of valve member 104 could be replaced with piston 108. Fluid passage 40 is the same as fluid passage 40 and fluid passage 52 is the same as fluid passage 52 with the exception that passages 40 and 52 enter chamber 42 through a vertical wall whereas passages 40 and 52 enter chamber 42 through a horizontal wall. The operation of the embodiment shown in Figure 9 is identical to that described above for Figures 1 through 8.

## Claims

1. A control valve system (10) comprising a housing (12) defining an inlet (14), an outlet (16) and an exhaust (18),
a first passage (40, 42, 80; 46, 48, 82) extending between said inlet (14) and said outlet (16);
a second passage (88, 90) extending between said outlet (16) and said exhaust (18);
a first plurality of valves (108, 120, 32, 34) disposed within said first passage (40, 42, 80; 46, 48, 82), the valves of said first plurality of valves (28, 30, 32, 34) being movable between a deactuated position where said first passage (40, 42, 80; 46, 48, 82) is closed and an actuated position where said first passage (40, 42, 80; 46, 48, 82) is open;
a second plurality of valves (112, 124) disposed within said second passage (88, 90), the valves of said second plurality of valves (112, 124) being movable between a deactuated position where said second passage (88, 90) is open and an actuated position where said second passage (88, 90) is closed; and
means for maintaining one valve of said first plurality of valves (108, 120, 32, 34) or second plurality of valves (112, 124) in said actuated position when one other valve of said first plurality of valves or second plurality of valves is in said deactuated position so as to maintain the control valve system (10) in a locked out position; **characterized by**
a reset passage (96) extending between a reset port and a fluid chamber (54, 60) for actuating said first plurality of valves or second plurality of valves so that the control valve system (10) remains in said locked out position until a resetting operation is performed by supplying pressurized fluid to said reset port in order to move said one valve of said first or second plurality of valves to said deactuated position.

2. The control valve system (10) according to claim 1 wherein said first plurality of valves (108, 120, 32, 34) comprises a first valve (108) and a second valve (120) disposed within said first passage (40, 42; 80; 46, 48, 82).

3. The control valve system (10) according to claim 2 wherein said second plurality of valves (112, 124) comprises a third valve (112) and a fourth valve (124) disposed within said second passage (88, 90).

4. The control valve system (10) according to claim 2 or 3 wherein said first plurality of valves (108, 120, 32, 34) comprises a fifth valve (32) disposed between said inlet (14) and said second valve (120).

5. The control valve system (10) according to claim 4 wherein said first plurality of valves (108, 120, 32, 34) comprises a sixth valve (34) disposed between said inlet (14) and said first valve (108).

6. The control valve system (10) according to claim 5 including a seventh valve (36) movable between a deactuated position and an actuated position to control said first (108), third (112) and fifth (32) valves; and
an eighth valve (38) movable between a deactuated position and an actuated position to control said second (120), fourth (124) and sixth (34) valves.

7. The control valve system (10) according to claim 1, further comprising:
a first valve (108) and a second valve (120) disposed within said first passage (40,42,80; 46,48,82) said first and second valves being movable between a deactuated position where said first passage (40,42,80; 46,48,82) is closed and an actuated position where said first passage (40,42,80; 46,48,82) is open;
a third valve (112) and a fourth valve (124) disposed within said second passage (88,90), said third and fourth valves being movable between a deactuated position where said second passage (88,90) is open and an actuated position where said second passage (88,90) is closed;
a fifth valve (32) disposed between said inlet (14) and said second valve (120), said fifth valve (32) being movable between a deactuated position where said inlet (14) does not communicate with said second valve (120) through said fifth valve (32) and an actuated position where said inlet (14) communicates with said second valve (120) through said fifth valve (32);
a first biasing member (132) for biasing said first (108), third (112) and fifth (32) valves into said deactuated position;
a sixth valve (34) disposed between said inlet (14) and said first valve (108), said sixth valve (34) being movable between a deactuated position where said inlet (14) does not communicate with said first valve (108) through said sixth valve (34) and an actuated position where said inlet (14) communicates with said first valve (108) through said sixth valve (34);
a second biasing member (136) for biasing said second (120), fourth (124) and sixth (34) valves into said deactuated position;
a seventh valve (36) movable between a deactuated position and an actuated position to control said first (108), third (112) and fifth (32) valves; and
an eighth valve (38) movable between a deactuated position and an actuated position to control said second (120), fourth (124) and sixth (34) valves.

8. The control valve system (10) according to claim 7 wherein said first valve (108) includes a first valve member controlling a first fluid passage (52, 56, 64), said eighth valve (38) communicating with said inlet (14) through said first fluid passage (64) when said first valve (108) is in said deactuated position.

9. The control valve system according to claim 8 wherein said first valve (108) is biased into said deactuated position by pressurized fluid being supplied through said first valve (108) from said inlet (14) said pressurized fluid passing through said first fluid passage (52, 56, 64).

10. The control valve system according to claim 9 wherein said second valve (120) includes a second valve member controlling a second fluid passage (58, 62, 68), said seventh valve (36) communicating with said inlet (14) through said second fluid passage (58, 62, 68) when said second valve (120) is in said deactuated position.

11. The control valve system according to claim 11 wherein said second valve (120) is biased into said deactuated position by pressurized fluid being supplied through said second valve (120) from said inlet (14), said pressurized fluid passing through said second fluid passage (58, 62, 68).

12. The control valve system according to claim 7 wherein said first valve (108) comprises a first valve member slidingly disposed within a first bore (42) defined by said housing (12), said fifth valve (32) comprises a first valve seat (130) slidingly disposed on said first valve member and said seventh valve (36) comprises a first solenoid valve secured to said housing (12).

13. The control valve system according to claim 12 wherein said first valve member controls a fluid passage (64), said eighth valve (38) communicating with said inlet (14) through said fluid passage (64) when said first valve (108) is in said deactuated position.

14. The control valve system according to claim 13 wherein said first valve (108) is biased into said deactuated position by pressurized fluid being supplied through said first valve (108) from said inlet (14), said pressurized fluid passing through said fluid passage (64).

15. The control valve system according to any of the claims 12 to 14 wherein said second valve (120) comprises a second valve member slidingly disposed within a second bore (48) defined by said housing (12), said sixth valve (34) comprises a second valve seat (134) slidingly disposed on said second valve member and said eighth valve (38) comprises a second solenoid valve secured to said housing (12).

16. The control valve system according to claim 15 wherein said second valve member controls a fluid passage (68), said seventh valve (36) communicating with said inlet (14) through said fluid passage (68) when said second valve (120) is in said deactuated position.

17. The control valve system according to claim 16 wherein said second valve (120) is biased into said deactuated position by pressurized fluid being supplied through said second valve (120) from said inlet (14), said pressurized fluid passing through said fluid passage (68).

## Patentansprüche

1. Steuerventilanlage (10) mit einem Gehäuse (12), das einen Einlass (14), einen Auslass (16) und einen Ablass (18) definiert,
einem ersten Kanal (40, 42, 80; 46, 48, 82), der zwischen dem Einlass (14) und dem Auslass (16) verläuft;
einem zweiten Kanal (88, 90), der zwischen dem Auslass (16) und dem Ablass (18) verläuft;
einer ersten Anzahl von Ventilen (108, 120, 32, 34), die innerhalb des ersten Kanals (40, 42, 80; 46, 48, 82) angeordnet sind, wobei die Ventile der ersten Anzahl von Ventilen (28, 30, 32, 34) zwischen einer unbetätigten Stellung, in der der erste Kanal (40, 42, 80; 46, 48, 82) geschlossen ist, und einer betätigten Stellung, in der der erste Kanal (40, 42, 80; 46, 48, 82) offen ist, bewegbar sind;
einer zweiten Anzahl von Ventilen (112, 124), die innerhalb des zweiten Kanals (88, 90) angeordnet sind, wobei die Ventile der zweiten Anzahl von Ventilen (112, 124) zwischen einer unbetätigten Stellung, in der der zweite Kanal (88, 90) offen ist, und einer betätigten Stellung, in der der zweite Kanal (88, 90) geschlossen ist, bewegbar sind; und
Mitteln zum Halten eines Ventils der ersten Anzahl von Ventilen (108, 120, 32, 34) oder zweiten Anzahl von Ventilen (112, 124) in der betätigten Stellung, wenn ein anderes Ventil der ersten Anzahl von Ventilen oder zweiten Anzahl von Ventilen in der unbetätigten Stellung ist, um die Steuerventilanlage (10) in einer Sperrstellung zu halten; **gekennzeichnet durch**
einen Rückstellkanal (96), der zwischen einer Rückstellöffnung und einer Strömungsmittelkammer (54, 60) verläuft, um die erste Anzahl von Ventilen oder zweite Anzahl von Ventilen so zu betätigen, dass die Steuerventilanlage (10) in der Sperrstellung bleibt, bis ein Rückstellvorgang ausgeführt wird, indem Druckmittel der Rückstellöffhung zugeführt wird, um das besagte eine Ventil der ersten oder zweiten Anzahl von Ventilen in die unbetätigte Stellung zu bewegen.

2. Steuerventilanlage (10) nach Anspruch 1, bei der die erste Anzahl von Ventilen (108, 120, 32, 34) ein erstes Ventil (108) und ein zweites Ventil (120) aufweist, die in dem ersten Kanal (40, 42; 80; 46, 48, 82) angeordnet sind.

3. Steuerventilanlage (10) nach Anspruch 2, bei der die zweite Anzahl von Ventilen (112, 124) ein drittes Ventil (112) und ein viertes Ventil (124) aufweist, die in dem zweiten Kanal (88, 90) angeordnet sind.

4. Steuerventilanlage (10) nach Anspruch 2 oder 3, bei der die erste Anzahl von Ventilen (108, 120, 32, 34) ein fünftes Ventil (32) aufweist, das zwischen dem Einlass (14) und dem zweiten Ventil (120) angeordnet ist.

5. Steuerventilanlage (10) nach Anspruch 4, bei der die erste Anzahl von Ventilen (108, 120, 32, 34) ein sechstes Ventil (34) aufweist, das zwischen dem Einlass (14) und dem ersten Ventil (108) angeordnet ist.

6. Steuerventilanlage (10) nach Anspruch 5, mit einem siebten Ventil (36), das zwischen einer unbetätigten Stellung und einer betätigten Stellung bewegbar ist, um das erste Ventil (108), das dritte Ventil (112) und das fünfte Ventil (32) zu steuern; und
einem achten Ventil (38), das zwischen einer unbetätigten Stellung und einer betätigten Stellung bewegbar ist, um das zweite Ventil (120), das vierte Ventil (124) und das sechste Ventil (34) zu steuern.

7. Steuerventilanlage (10) nach Anspruch 1, die ferner aufweist:
ein erstes Ventil (108) und ein zweites Ventil (120), die in dem ersten Kanal (40, 42, 80; 46, 48, 82) angeordnet sind, wobei das erste und zweite Ventil zwischen einer unbetätigten Stellung, in der der erste Kanal (40, 42, 80; 46, 48, 82) geschlossen ist, und einer betätigten Stellung, in der der erste Kanal (40, 42, 80; 46, 48, 82) offen ist, bewegbar sind;
ein drittes Ventil (112) und ein viertes Ventil (124), die in dem zweiten Kanal (88, 90) angeordnet sind, wobei das dritte und vierte Ventil zwischen einer unbetätigten Stellung, in der der zweite Kanal (88, 90) offen ist, und einer betätigten Stellung, in der der zweite Kanal (88, 90) geschlossen ist, bewegbar sind;
ein fünftes Ventil (32), das zwischen dem Einlass (14) und dem zweiten Ventil (120) angeordnet ist, wobei das fünfte Ventil (32) zwischen einer unbetätigten Stellung, in der der Einlass (14) nicht mit dem zweiten Ventil (120) über das fünfte Ventil (32) verbunden ist, und einer betätigten Stellung, in der der Einlass (14) mit dem zweiten Ventil (20) über das fünfte Ventil (32) verbunden ist, bewegbar ist;
ein erstes Vorsparinglied (132) zum Vorspannen des ersten Ventils (108), dritten Ventils (112) und fünften Ventils (132) in die unbetätigte Stellung;
ein sechstes Ventil (34), das zwischen dem Einlass (14) und dem ersten Ventil (108) angeordnet ist, wobei das sechste Ventil (34) zwischen einer unbetätigten Stellung, in der der Einlass (14) nicht mit dem ersten Ventil (108) über das sechste Ventil (34) verbunden ist, und einer betätigten Stellung, in der der Einlass (14) mit dem ersten Ventil (108) durch das sechste Ventil (34) verbunden ist, bewegbar ist;
ein zweites Vorspannglied (136) zum Vorspannen des zweiten Ventils (120), vierten Ventils (124) und sechsten Ventils (34) in die unbetätigte Stellung;
ein siebtes Ventil (36), das zwischen einer unbetätigten Stellung und einer betätigten Stellung bewegbar ist, um das erste Ventil (108), dritte Ventil (112) und fünfte Ventil (32) zu steuern; und
ein achtes Ventil (38), das zwischen einer unbetätigten Stellung und einer betätigten Stellung bewegbar ist, um das zweite Ventil (120), vierte Ventil (124) und sechste Ventil (34) zu steuern.

8. Steuerventilanlage (10) nach Anspruch 7, bei der das erste Ventil (108) ein erstes Ventilglied aufweist, das einen ersten Strömungskanal (52, 56, 64) steuert, wobei das achte Ventil (38) mit dem Einlass (14) durch den ersten Strömungskanal (64) verbunden ist, wenn sich das erste Ventil (108) in der unbetätigten Stellung befindet.

9. Steuerventilanlage nach Anspruch 8, bei der das erste Ventil (108) in die unbetätigte Stellung durch Druckmittel vorgespannt ist, das aus dem Einlass (14) durch das erste Ventil (108) zugeführt wird, wobei das Druckmittel durch den ersten Strömungskanal (52, 56, 64) strömt.

10. Steuerventilanlage nach Anspruch 9, bei der das zweite Ventil (120) ein zweites Ventilglied aufweist, das einen zweiten Strömungskanal (58, 62, 68) steuert, wobei das siebte Ventil (36) mit dem Einlass (14) durch den zweiten Strömungskanal (58, 62, 68) verbunden ist, wenn sich das zweite Ventil (120) in der unbetätigten Stellung befindet.

11. Steuerventilanlage nach Anspruch 10, bei der das zweite Ventil (120) in die unbetätigte Stellung durch Druckmittel vorgespannt ist, das aus dem Einlass (14) durch das zweite Ventil (120) zugeführt wird, wobei das Druckmittel durch den zweiten Strömungskanal (48, 62, 68) strömt.

12. Steuerventilanlage nach Anspruch 7, bei der das erste Ventil (108) ein erstes Ventilglied aufweist, das innerhalb einer vom Gehäuse (12) definierten ersten Bohrung (42) gleitend angeordnet ist, dass das fünfte Ventil (32) einen ersten Ventilsitz (130) aufweist, der an dem ersten Ventilglied gleitend angeordnet ist, und dass das siebte Ventil (36) ein erstes Magnetventil aufweist, das an dem Gehäuse (12) befestigt ist.

13. Steuerventilanlage nach Anspruch 12, bei der das erste Ventilglied einen Strömungskanal (64) steuert, wobei das achte Ventil (38) mit dem Einlass (14) durch den Strömungskanal (64) verbunden ist, wenn sich das erste Ventil (108) in der unbetätigten Stellung befindet.

14. Steuerventilanlage nach Anspruch 13, bei der das erste Ventil (108) in die unbetätigte Stellung durch Druckmittel vorgespannt ist, das aus dem Einlass (14) durch das erste Ventil (108) zugeführt wird, wobei das Druckmittel durch den Strömungskanal (64) strömt.

15. Steuerventilanlage nach einem der Ansprüche 12 bis 14, bei der das zweite Ventil (120) ein zweites Ventilglied aufweist, das innerhalb einer von dem Gehäuse (12) definierten zweiten Bohrung (48) gleitend angeordnet ist, dass das sechste Ventil (34) einen zweiten Ventilsitz (134) aufweist, der an dem zweiten Ventilglied gleitend angeordnet ist, und dass das achte Ventil (38) ein zweites Magnetventil aufweist, das an dem Gehäuse (12) befestigt ist.

16. Steuerventilanlage nach Anspruch 15, bei der das zweite Ventilglied einen Strömungskanal (68) steuert, wobei das siebte Ventils (36) mit dem Einlass (14) durch den Strömungskanal (68) verbunden ist, wenn sich das zweite Ventil (120) in der unbetätigten Stellung befindet.

17. Steuerventilanlage nach Anspruch 16, bei der das zweite Ventil (120) in die unbetätigte Stellung vorgespannt ist, indem Druckmittel aus dem Einlass (14) durch das zweite Ventil (120) zugeführt wird, wobei das Druckmittel durch den Strömungskanal (68) strömt.

## Revendications

1. Système de vannes de commande (10) comprenant un boîtier (12) définissant une entrée (14), une sortie (16) et un échappement (18),
un premier passage (40, 42, 80; 46, 48, 82) s'étendant entre ladite entrée (14) et ladite sortie (16);
un deuxième passage (88, 90) s'étendant entre ladite sortie (16) et ledit échappement (18);
une première pluralité de vannes (108, 120, 32, 34) disposées à l'intérieur dudit premier passage (40, 42, 80; 46, 48, 82), les vannes de ladite première pluralité de vannes (28, 30, 32, 34) étant mobiles entre une position désactivée dans laquelle ledit premier passage (40, 42, 80; 46, 48, 82) est fermé, et une position activée dans laquelle ledit premier passage (40, 42, 80; 46, 48, 82) est ouvert;
une deuxième pluralité de vannes (112, 124) disposées à l'intérieur dudit deuxième passage (88, 90), les vannes de ladite deuxième pluralité de vannes (112, 124) étant mobiles entre une position désactivée dans laquelle ledit premier passage (88, 90) est ouvert, et une position activée dans laquelle ledit deuxième passage (88, 90) est fermé; et
des moyens pour maintenir une première vanne de ladite première pluralité de vannes (108, 120, 32, 34) ou de la deuxième pluralité de vannes (112, 124) dans ladite position activée lorsqu'une autre vanne de ladite première pluralité de vannes ou de ladite deuxième pluralité de vannes se trouve dans ladite position désactivée, de manière à maintenir le système de vannes de commande (10) dans une position verrouillée, **caractérisé par**:
un passage de retour à l'état initial (96) s'étendant entre un orifice de retour à l'état initial et une chambre de fluide (54, 60) pour actionner ladite première pluralité de vannes ou ladite deuxième pluralité de vannes de telle sorte que le système de vannes de commande (10) reste dans ladite position verrouillée jusqu'à ce qu'une opération de retour à l'état initial soit exécutée en fournissant un fluide sous pression audit orifice de retour à l'état initial en vue de déplacer ladite première vanne de ladite première ou de ladite deuxième pluralité de vannes dans ladite position désactivée.

2. Système de vannes de commande (10) selon la revendication 1, dans lequel ladite première pluralité de vannes (108, 120, 32, 34) comprend une première vanne (108) et une deuxième vanne (120) disposées à l'intérieur dudit premier passage (40, 42, 80; 46, 48, 82).

3. Système de vannes de commande (10) selon la revendication 2, dans lequel ladite deuxième pluralité de vannes (112, 124) comprend une troisième vanne (112) et une quatrième vanne (124) disposées à l'intérieur dudit deuxième passage (88, 90).

4. Système de vannes de commande (10) selon la revendication 2 ou 3, dans lequel ladite première pluralité de vannes (108, 120, 32, 34) comprend une cinquième vanne (32) disposée entre ladite entrée (14) et ladite deuxième vanne (120).

5. Système de vannes de commande (10) selon la revendication 4, dans lequel ladite première pluralité de vannes (108, 120, 32, 34) comprend une sixième vanne (34) disposée entre ladite entrée (14) et ladite première vanne (108).

6. Système de vannes de commande (10) selon la revendication 5, comprenant une septième vanne (36) mobile entre une position désactivée et une position activée pour commander lesdites première (108), troisième (112) et cinquième (32) vannes; et
une huitième vanne (38) mobile entre une position désactivée et une position activée pour commander lesdites deuxième (120), quatrième (124) et sixième (34) vannes.

7. Système de vannes de commande (10) selon la revendication 1, comprenant:
une première vanne (108) et une deuxième vanne (120) disposées à l'intérieur du premier passage (40, 42, 80; 46, 48, 82), lesdites première et deuxième vannes étant mobiles entre une position désactivée dans laquelle ledit premier passage (40, 42, 80; 46, 48, 82) est fermé et une position activée dans laquelle ledit premier passage (40, 42, 80; 46, 48, 82) est ouvert;
une troisième vanne (112) et une quatrième vanne (124) disposées à l'intérieur dudit deuxième passage (88, 90), lesdites troisième et quatrième vannes étant mobiles entre une position désactivée dans laquelle ledit deuxième passage (88, 90) est ouvert, et une position activée dans laquelle ledit deuxième passage (88, 90) est fermé;
une cinquième vanne (32) disposée entre ladite entrée (14) et ladite deuxième vanne (120), ladite cinquième vanne (32) étant mobile entre une position désactivée dans laquelle ladite entrée (14) ne communique pas avec ladite deuxième vanne (120) par l'intermédiaire de ladite cinquième vanne (32), et une position activée dans laquelle ladite entrée (14) communique avec ladite deuxième vanne (120) par l'intermédiaire de ladite cinquième vanne (32);
un premier élément de poussée (132) pour pousser lesdites première (108), troisième (112) et cinquième (32) vannes dans ladite position désactivée;
une sixième vanne (34) disposée entre ladite entrée (14) et ladite première vanne (108), ladite sixième vanne (34) étant mobile entre une position désactivée dans laquelle ladite entrée (14) ne communique pas avec ladite première vanne (108) par l'intermédiaire de ladite sixième vanne (34), et une position activée dans laquelle ladite entrée (14) communique avec ladite première vanne (108) par l'intermédiaire de ladite sixième vanne (34);
un deuxième élément de poussée (136) pour pousser lesdites deuxième (120), quatrième (124) et sixième (34) vannes dans ladite position désactivée;
une septième vanne (36) mobile entre une position désactivée et une position activée pour commander lesdites première (108), troisième (112) et cinquième (32) vannes; et
une huitième vanne (38) mobile entre une position désactivée et une position activée pour commander lesdites deuxième (120), quatrième (124) et sixième (34) vannes.

8. Système de vannes de commande (10) selon la revendication 7, dans lequel ladite première vanne (108) comprend un premier élément de vanne commandant un premier passage de fluide (52, 56, 64), ladite huitième vanne (38) communiquant avec ladite entrée (14) à travers ledit premier passage de fluide (64) lorsque ladite première vanne (108) se trouve dans ladite position désactivée.

9. Système de vannes de commande selon la revendication 8, dans lequel ladite première vanne (108) est poussée dans ladite position désactivée par un fluide sous pression fourni à travers ladite première vanne (108) à partir de ladite entrée (14), ledit fluide sous pression passant à travers ledit premier passage de fluide (52, 56, 64).

10. Système de vannes de commande selon la revendication 9, dans lequel ladite deuxième vanne (120) comprend un deuxième élément de vanne commandant un deuxième passage de fluide (58, 62, 68), ladite septième vanne (36) communiquant avec ladite entrée (14) par l'intermédiaire dudit deuxième passage de fluide (58, 62, 68) lorsque ladite deuxième vanne (120) se trouve dans ladite position désactivée.

11. Système de vannes de commande selon la revendication 11, dans lequel ladite deuxième vanne (120) est poussée dans ladite position désactivée par un fluide sous pression fourni à travers ladite deuxième vanne (120) à partir de ladite entrée (14), ledit fluide sous pression passant à travers ledit deuxième passage de fluide (58, 62, 68).

12. Système de vannes de commande selon la revendication 7, dans lequel ladite première vanne (108) comprend un premier élément de vanne disposé d'une façon glissante à l'intérieur d'un premier alésage (42) défini par ledit boîtier (12), ladite cinquième vanne (32) comprenant un premier siège de vanne (130) disposé d'une façon glissante sur ledit premier élément de vanne, et ladite septième vanne (36) comprenant une première vanne magnétique fixée sur ledit boîtier (12).

13. Système de vannes de commande selon la revendication 12, dans lequel ledit premier élément de vanne commande un passage de fluide (64), ladite huitième vanne (38) communiquant avec ladite entrée (14) à travers ledit passage de fluide (64) lorsque ladite première vanne (108) se trouve dans ladite position désactivée.

14. Système de vannes de commande selon la revendication 13, dans lequel ladite première vanne (108) est poussée dans ladite position désactivée par un fluide sous pression fourni par l'intermédiaire de ladite première vanne (108) à partir de ladite entrée (14), ledit fluide sous pression passant à travers ledit passage de fluide (64).

15. Système de vannes de commande selon l'une quelconque des revendications 12 à 14, dans lequel ladite deuxième vanne (120) comprend un deuxième élément de vanne disposé d'une façon glissante à l'intérieur d'un deuxième alésage (48) défini par ledit boîtier (12), ladite sixième vanne (34) comprenant un deuxième siège de vanne (134) disposé d'une façon glissante sur ledit deuxième élément de vanne, et ladite huitième vanne (38) comprenant une deuxième vanne magnétique fixée sur ledit boîtier (12).

16. Système de vannes de commande selon la revendication 15, dans lequel ledit deuxième élément de vanne commande un passage de fluide (68), ladite septième vanne (36) communiquant avec ladite entrée (14) à travers ledit passage de fluide (68) lorsque ladite deuxième vanne (120) se trouve dans ladite position désactivée.

17. Système de vannes de commande selon la revendication 16, dans lequel ladite deuxième vanne (120) est poussée dans ladite position désactivée par un fluide sous pression fourni par l'intermédiaire de ladite deuxième vanne (120) à partir de ladite entrée (14), ledit fluide sous pression passant à travers ledit passage de fluide (68).
